Europäisches Patentamt

European Patent Office

Office européen des brevets

(11) Publication number: **0 061 813**
**A1**

## (12) EUROPEAN PATENT APPLICATION

(21) Application number: **82200373.7**

(22) Date of filing: **26.03.82**

(51) Int. Cl.³: **C 02 F 3/28**

(30) Priority: **01.04.81 IT 2088381**

(43) Date of publication of application:
**06.10.82 Bulletin 82/40**

(84) Designated Contracting States:
**AT BE CH DE FR GB IT LI LU NL SE**

(71) Applicant: **R.B.S. International S.p.A.**
**Via Chioda 125**
**I-37136 Verona(IT)**

(72) Inventor: **Di Bello, Carmine**
**Via San Marco, 2943**
**I-30124 Venezia(IT)**

(74) Representative: **Mittler, Enrico**
**Corso Buenos Aires, 64**
**I-20124 Milano(IT)**

(54) Dynamic anaerobic equipment for waste water treatment.

(57) Inside a closed well (1) there is located at least one rotating device (2) provided with at least one group (5) of parallel shaped elements (9), which define parallel canalizations (10) which develops in the direction of rotation of the device (2). The walls of the canalizations (10) aid the adherence of anaerobic microorganisms which, in contact with the material to be treated, cause the digestion of the mud and the depuration of the sewages.

Fig.1

EP 0 061 813 A1

Croydon Printing Company Ltd.

"Dynamic anaerobic equipment for waste water treatment"

\* \* \* \* \*

The present invention relates to an equipment, which is able to operate, by anaerobic way, waste water recovery treatments, such as the water purification, the mud stabilization or digestion and the nutrient removal.

It is known that the complete recovery of civil and industrial waste water is carried out through four consecutive treatments, so called: primary, secondary, tertiary and quaternary.

The primary treatment consists in the separation of the water to be purified from the sedimentable solids, which settle onto the bottom of a tank or a sedimentation channel in the form of mud.

The secondary treatment in its turn consists in a biological depuration of the water and is usually carried out by aerobic way, that is in the presence of oxygen, for example by periodically immerging and extracting from the water through suitable rotating supports, a flora of microorganisms which are able, in the immersion phase, to feed on polluting organic substances contained in the water and, in the emerging phase in contact with the oxygen of the air, to cause the biodegradation of the organic substances which have been caught and their consequent transformation into biological mud which can settle.

The tertiary treatment in its turn consists in the elimination of the nutrient substances, such as phosphates and nitrates, and in the disinfection, usually carried out by ozono or hypochlorite.

The quaternary treatment finally consists in making the water drinkable.

A process associated to that of water recovery is represented by the stabilization or "digestion" of the residual mud, mainly produced by the primary or sedimentation treatment and by the secondary or biolo gical depuration treatment.

Such a process, intended as a transformation of the constitutive components of mud into elementary substan ces or stable chemical radicals destined to various uses, for example as fertilizers, has a particular im portance, since its development by anaerobic way, that is without oxygen, give rise to a gas mixture, in which the methane gas is predominant.

The mud anaerobic digestion is to be considered as, a process of biological and biochemical nature, to which microorganisms of anaerobic kind mainly take active part, even if microorganisms of other kind are not to be excluded. Said microorganisms operate on mud to be stabilized in such a way as to transform their organic substratum into methane and carbon dioxide, passing through some intermediate (hydrolitic, acid methanic) phases . The digestion process is also conditioned by various elements, such as PH, alkalinity, temperature, carbon/nutrient ratio, toxic.substances and so on.

At present, the mud anaerobic digestion is executed in the inside of sealtight big tanks, where an agitator provides to keep in movement the solid-liquid mass to aid the mixing thereof and to prevent, on the con trary, the stratification, that is the formation of solids (digested mud) on the tank bottom, the formation of slime and mud (the so called "scum") at the surface and the formation of a liquid layer (the so called "overfloating") between solids and scum. It must therefore be underlined that the stratification, if it is to be avoided during the digestion process, on the other hand is convenient for the periodic extraction of the digested mud , of the scum and of the liquid (overfloating) to be recycled to the inlet of the water treatment equipment.

The main object of the present invention is to realize an equipment able to execute the mud anaerobic digestion with increased efficiency with respect to the presently used systems.

According to the invention, such an object is reached by a dynamic anaerobic equipment, characterized in that it comprises at least one treatment stage including, in the inside of a closed well periodically fed with the material to be treated, a rotating device at least partially immerged in said material and provided with at least one group of shaped parallel elements which define parallel canalizations developping in the direction of rotation of the group.

Said rotating device is preferably followed by a rest zone, in which the stratification of the worked material is allowed.

Besides the treatment stages can be two or more, arranged the one following the other in adjacent way.

The equipment according to the invention allows a better and quicker digestion of the mud , with consequent improved stabilization and increased production of methane.

This is due to the fact that the rotating device, which is a member of it, not only provides for mud mixing, but thanks to the wide contact area assured by the various canalizations with which it is provided (and in which microorganisms stick to the walls of the shaped elements and the mud enter and exit in continuity) allows also an increased, continuous and repeated biological and biochemical exchange between the anaerobic microorganisms mass (or "biomass") and the mud in the digestion phase.

Besides it is to be noted that the equipment according to the invention not only leads itself to the mud digestion but also to the contemporaneous biological depuration of waste water or sewages and eventually to nutrient removal. Particularly, by introducing sewage (that is polluted liquid plus substances in suspension plus substances which can settle) into an equipment according to the invention, it is possible to obtain in a very satisfactory way both the anaerobic biological depuration of the sewage with formation of biological mud and the stabilization of the above mentioned mud and of that settled for sedimentation. The final result is represented by stable mud and by the production of methane gas as in case of use as a simple stabilizer, and in addition by the formation of an overfloating with very reduced polluting charge, which requests correspondingly reduced expenses and equipments for the completing of the depuration process.

An exemplary embodiment of the equipment according to the invention is illustrated by exemplificative but not limitative way in the enclosed drawings, in which:

Fig. 1 shows in axial section, along line I-I of Fig. 2, a two-stage equipment which can be employed for mud stabilization, as well as for anaerobic depuration of sewages;

Fig. 2 shows said equipment as sectioned in plan along line II-II of Fig. 1;

Fig. 3 shows in enlarged perspective view one of the groups of shaped elements making part of the rotating devices included in the above mentioned equipment;

Fig. 4 shows the more enlarged detail, in transversal section, of a possible structure and mutual arrangement of the shaped elements which constitute the group of Fig. 3;

Figs. 5-7 show alternative shapes and arrangements of said shaped elements.

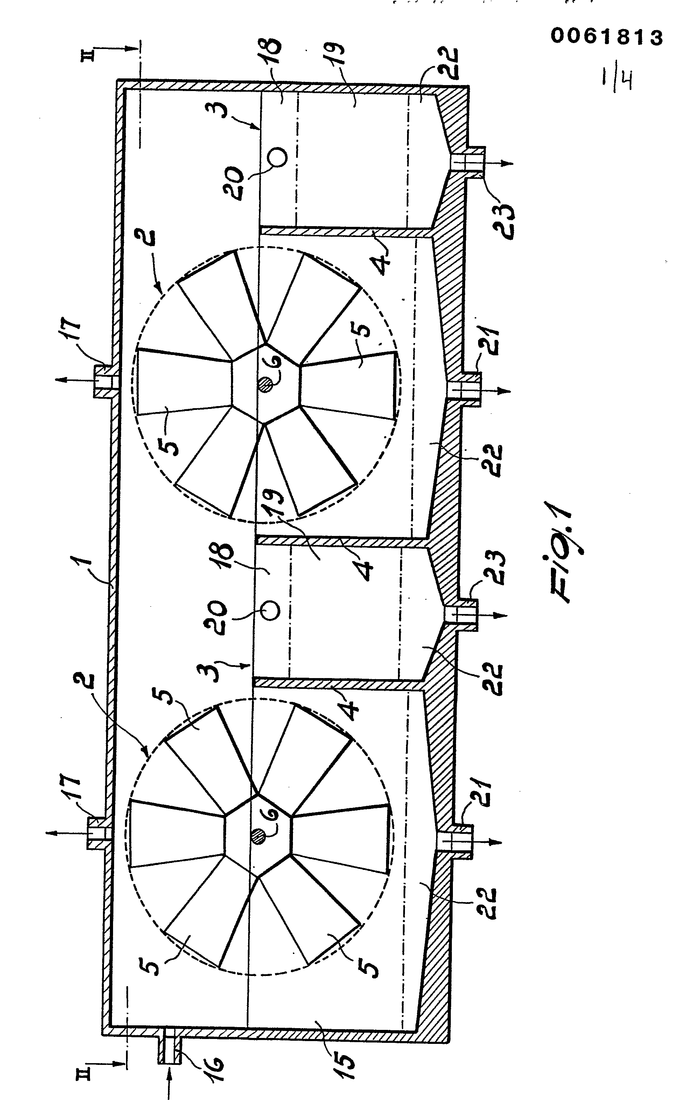

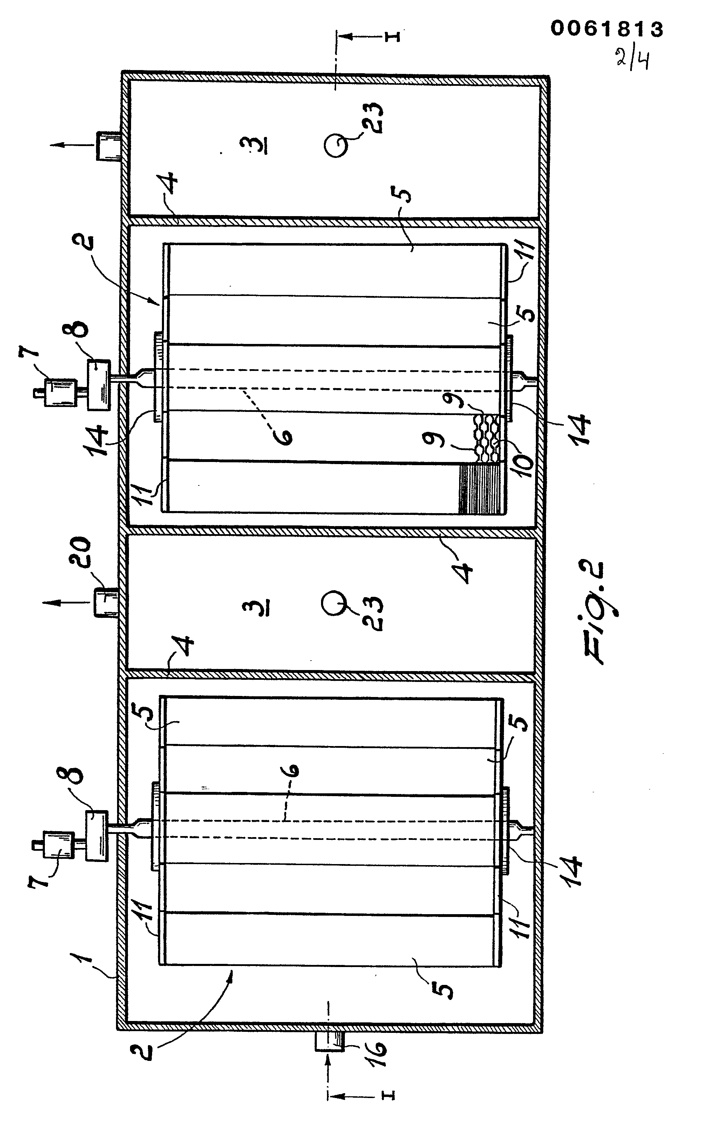

The equipment illustrated in Figs. 1 and 2 includes two treatment stages situated the one following the other in the inside of a closed well 1, which can be laid partially or completely underground.

A first stage includes a rotating device 2, followed by a rest zone 3 defined between two parallel vertical walls 4. The second stage is equal to the first one.

The rotating device 2, whose constructive details are better shown in Figs. 3-7, comprises a plurality of groups of shaped elements, which are indicated in their assembly by the reference number 5 and are radially disposed (Fig. 1) with respect to an horizontal drive shaft 6 operated by a motor 7 through a reduction unit 8 (Fig. 2).

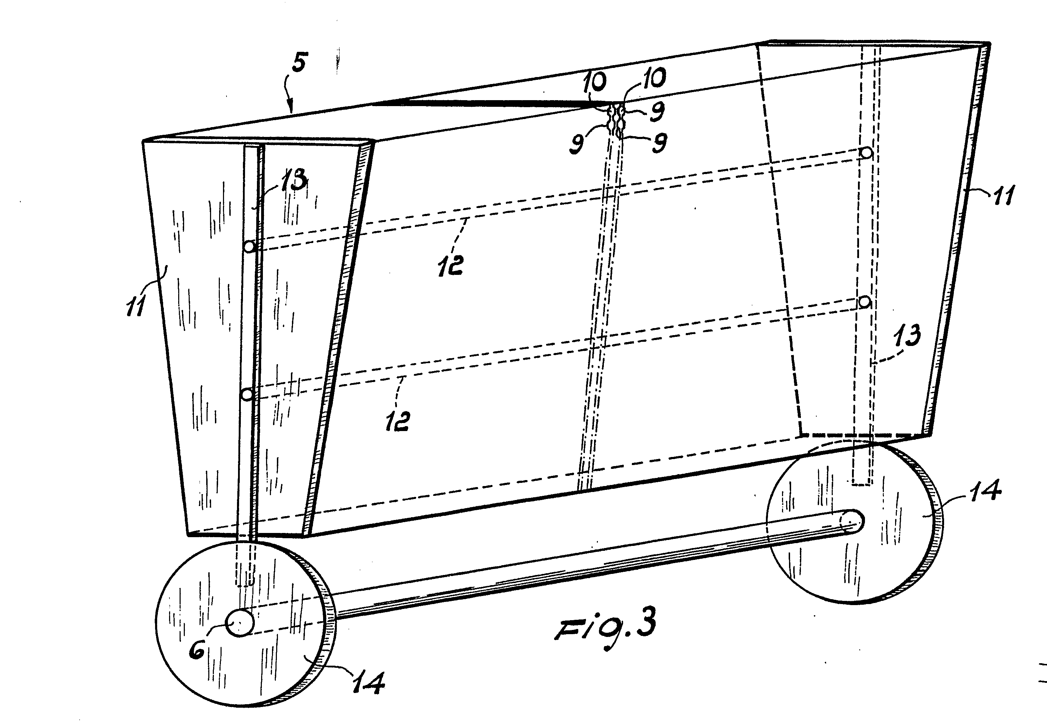

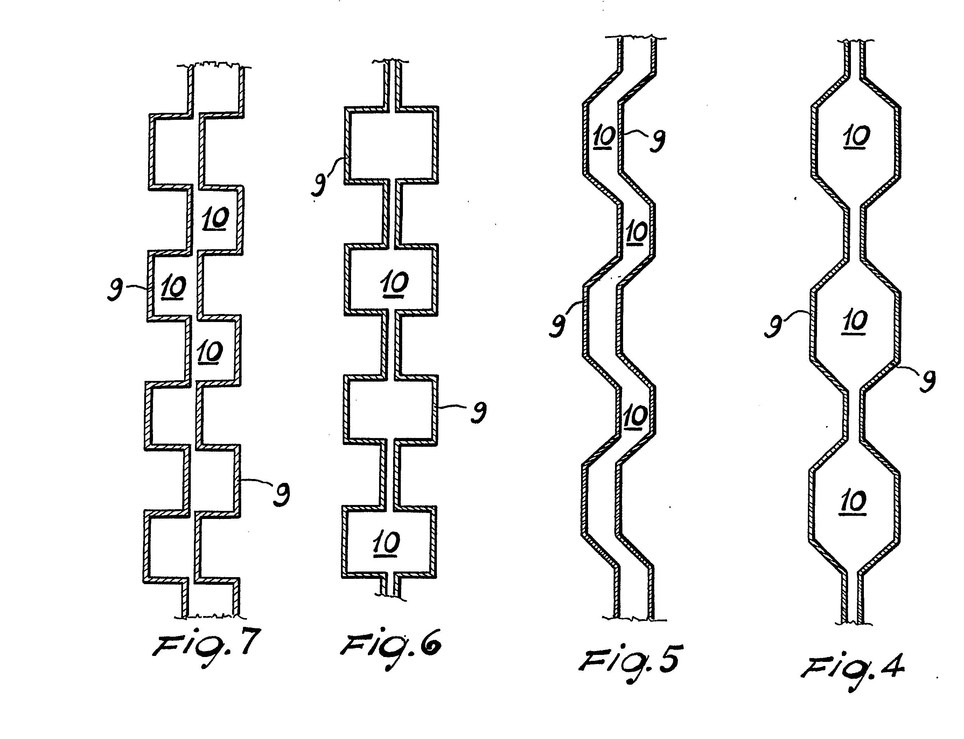

Every group 5, which can assume every desired shape in addition to the trapezoidal one illustrated in the drawings, is formed by a plurality of shaped elements 9 (with trapezoidal shape as in Figs. 4 and 5 or with rectangular shape as in Figs. 6 and 7), which are disposed adjacent one another, perpendicularly to the drive shaft 6, with either opposed concavities as in Figs. 4 and 6 or parallel concavities as in Figs. 5 and 7. In any case they thus define a plurality of parallel canalizations 10 (Figs. 4-7) which develop parallelly to the rotation direction of the device 2 and are open at both ends.

As it appears evident from Fig. 3, the whole group of shaped elements 9 is situated between two end plates 11 and here retained by a pair of tie rods 12 reacting betwwen a pair of radial strips 13 situated outside the plates 11 and opportunely fixed to disks 14 in their turn fixed on the shaft 6.

During working, the rotating device 2 of the first stage is rotated partially immerged in a bath of material to be worked 15, which is introduced into the well 1 through a feed mouth 16 provided with a suitable closure (not shown in the drawings). It is therefore possible to provide for its rotation in a condition of total immersion.

In the bath there are also present suitable microorganisms of anaerobic kind, which, as a result of the rotation of the device 2, are inclined to enter the canalization 10 thereof and to stick to the walls of the shaped elements 9, thus forming a biomass.

If the equipment is used as a simple mud stabilizer so that the bath 15 is formed exclusively by mud settled during a primary treatment of settling and by biological mud produced during a secondary treatment of biological depuration, the above mentioned biomass continuously comes into contact with the mud which enter and exit from the canalizations 10 and by biological and biochemical reaction causes the progressive stabilization or "digestion" of the same mud and the consequent production of methane. The latter can be extracted through mouths 17 provided with suitable closure and safety devices (not shown in the drawings), while the partially worked mud, indicated with 22, settle on the well bottom, under the rotating device of the first stage, or on the bottom of a following rest zone 3. In the latter, by stratification, there forms over the mud 22 the so called "overfloating" 19 and thereover the so called "scum" 18. Mouths 21 and 23 allow at the right moment the extraction of desired quantities of mud and overfloating, which are introduced in the second stage for a new cycle of stabilization. The scum in its turn is extracted through a mouth 20.

In the second stage the process is repeated in the same way, originating a further production of methane and a complete digestion of the mud.

Further stages can possibly be provided for an improved digestion.

If the equipment is used on the contrary for the depuration of sewages and the stabilization of the relative muds, so that the bath 15 is formed by sewages containing polluted liquid, substances in suspension and substances which can settle, the biomass attached to the walls of the shaped elements 9 produces also a biological depuration of the sewages, feeding on the polluting substances contained therein and causing the transformation thereof into mud, of which the same biomass causes the stabilization. It is produced methane again and in the rest zones 3 the worked material becomes stratified, creating between the scum and the digested mud an overfloating at low polluting charge, which, if necessary, can then be brought to a complete depuration by equipments of low cost.

It is to be noted that, whatever is the kind of use, the realization of the equipment according to the invention in the form of a number of successive stages in wells of limited height and partially or totally laid underground offers various advantages with respect to the known digestors at independent tanks. The main advantages are:

- the reduction of the manufacture costs, seeing the semplicity of the construction;

- the reduction of the consumption of termic energy for the heating of the muds, deriving from the possibility of laying the well underground;

- the simplification of the feed of the material to be worked and of the discharge of the digested mud, as well as of the overfloating and of the scum;

- separated stratification of the digestion;

- a more simple control and regulation of PH and alkalinity;

- bearing of a greater charge of toxic substances contained in the mud to be digested, without interference with the digestion and non-polluting process.

## CLAIMS

1. Dynamic anaerobic equipment characterized in that it comprises at least one treatment stage including, inside a closed well periodically fed with the material to be worked, a rotating device at least partially immerged in said material and provided with at least one group of shaped parallel elements which define parallel canalizations developping in the rotation direction of the group.

2. Equipment acoording to claim 1, characterized in that said treatment stage includes, downstreams of said device, a rest zone in which the stratification of the worked material is allowed.

3. Equipment according to claim 2, characterized in that said treatment stage is followed by other similar stages.

4. Equipment according to claim 1, characterized in that said well is laid at least partially underground.

Fig.1

0061813

1/4

Fig.2

Fig.3

Fig.7    Fig.6    Fig.5    Fig.4

0061813

4/4

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | <u>US - A - 3 232 865</u> (QUINN)<br>  * Column 1, lines 9-14;<br>   column 2, lines 37-40 *<br><br>-- | 1 | C 02 F 3/28 |
| A | <u>GB - A - 2 035 284</u> (GOODRICH)<br>  * Page 1, lines 5, 34-39;<br>   fig. 1 *<br><br>-- | 1 | |
| A | <u>US - A - 4 013 559</u> (JOHNSON)<br>  * Claims 1,2; fig. 5,6,8 *<br><br>-- | 1,2 | TECHNICAL FIELDS SEARCHED (Int.Cl. ³) |
| A | <u>CA - A - 1 080 862</u> (GUILBAULT)<br>  * Claim 1 *<br><br>---- | 1 | C 02 F |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search | Date of completion of the search | Examiner | |
| VIENNA | 24-06-1982 | WILFLINGER | |

EPO Form 1503.1  06.78